Europäisches Patentamt

European Patent Office

Office européen des brevets

(19)

(11) **EP 1 531 424 A2**

(12) **EUROPEAN PATENT APPLICATION**

(43) Date of publication:
 **18.05.2005 Bulletin 2005/20**

(51) Int Cl.[7]: **G06T 9/00**

(21) Application number: **04026379.0**

(22) Date of filing: **05.11.2004**

| | |
|---|---|
| (84) Designated Contracting States: **AT BE BG CH CY CZ DE DK EE ES FI FR GB GR HU IE IS IT LI LU MC NL PL PT RO SE SI SK TR** Designated Extension States: **AL HR LT LV MK YU** | (71) Applicant: **SEIKO EPSON CORPORATION** **Tokyo 163 (JP)** |
| (30) Priority: **17.11.2003 US 520902** **07.06.2004 US 885538** | (72) Inventor: **Guleryuz, Onur G.** **Sunnyvale California 94086 (US)** (74) Representative: **Grünecker, Kinkeldey, Stockmair & Schwanhäusser Anwaltssozietät Maximilianstrasse 58 80538 München (DE)** |

(54) **Inter and intra band prediction of singularity coefficients using estimates based on nonlinear approximants**

(57)    An algorithm that estimates or predicts a portion $x_1$ of an original signal represented by the vector $x = [x_0\ x_1]^T$, of which $x_0$ is the known portion and $x_1$ the unknown portion, obtains the estimate $y = [x_0\ x_1]^T$ by first forming an initial estimate $y_0 = [x_0\ 0]^T$, that is, an initial estimate of $x_1$, the unknown part of the original signal $x$. A de-noising matrix $D_1$ is computed by applying a transform matrix to $y_0$ and hard-thresholding coefficients using an initial threshold $T_0$. An operation is performed using $D_1$ to form a second signal estimate $y_1$. The threshold may then be successively decremented by $\Delta T$ to obtain a next threshold $T_n$, after which a next de-noising $D_{n+1}$ is computed by applying the transform matrix to $y_n$ and hard-thresholding coefficients using $T_n$, and an operation is performed using $D_{n+1}$ to form the next signal estimate $y_{(n+1)}$. This loop in which the threshold is successively reduced to form the next signal estimate is performed until a final threshold $T_f$ is reached.

Fig. 4

EP 1 531 424 A2

**Description**

**Continuing Application Data**

This application claims priority under 35 U.S.C. § 119(e) on provisional application serial no. 60/520,902, filed on November 17, 2003. This application is also related to application serial nos. 10/779,540; 10/646,248 and 10/229,667, filed on February 13, 2004; August 22, 2003 and August 28, 2002 respectively and respectively entitled "Weighted Overcomplete De-Noising;" "Image Recovery Using Thresholding and Direct Linear Solvers" and "Iterated De-Noising For Image Recovery." The content of each of these applications is incorporated by reference herein.

**BACKGROUND OF THE INVENTION**

**Field of the Invention**

The present invention relates to techniques for predicting data that is missing from a digital signal (e.g., a digital image). The predictions may be used to estimate the missing data, de-noise, or alleviate distortion in, a digital signal, or to enhance signal density. The techniques may be employed in methods/algorithms which may embodied in software, hardware or combination thereof and may be implemented on a computer or other processor-controlled device.

**Description of the Related Art**

One of the key problems in wavelet image compression and other applications of wavelets on images is the compressibility of wavelet coefficients over edges. For one-dimensional piecewise smooth signals it can be shown that wavelet representations, and hence compression applications based on wavelets, are immune to localize singularities. For two-dimensional piecewise smooth signals, however, it is now widely recognized that edges lead to a non-sparse set of wavelet coefficients, and compression performance is dominated by localized singularities which manifest themselves along curves. Researchers have been trying to address this problem by systematically following two main tracks: First, by better modeling wavelet coefficients over edges, higher order statistical dependencies can be exploited, and the number of bits spent on such coefficients by compression codecs can be reduced. Second, by designing new representations and transforms, it may be possible to convert the two-dimensional problem into the one-dimensional case where edges are reduced to point singularities and are encoded with a much reduced number of bits.
"First track" approaches operate on naturally decimated wavelet coefficients but they have to combat aliasing concerns in designing their models. In a related fashion, some of the key properties of the best representations designed via the "second track" can only be exploited via translation/rotation invariant, overcomplete transforms. However, the use of overcomplete transforms gives rise to a dilemma in compression where one must first represent the input signal with an overcomplete expansion (which significantly increases the amount of information to encode) and then somehow obtain a compressed bitstream that competes with today's state-of-the-art codecs in a rate-distortion sense.

**OBJECTS OF THE INVENTION**

It is an object of the present invention to overcome the shortcomings of the prior approaches discussed above.
It is another object of this invention to provide a technique for predicting and estimating data that is missing from a digital signal that does not suffer from the deficiencies of the prior approaches discussed above.

**SUMMARY OF THE INVENTION**

According to one aspect, the invention provides a method for forming a signal estimate y, wherein the to-be-estimated signal x includes a first element constituting available samples and a second element denoting missing samples, and wherein the signal estimate y includes the first element and an estimation element denoting an estimate of the missing samples in the second element. The method comprises the steps of: setting an initial estimate of the estimation element in an initial signal estimate $y_0$ to all zeros; computing a de-noising matrix $D_{n+1}$ based on a transform component; and applying the computed de-noising matrix $D_{n+1}$ to $y_n$ between one and $C$ times to form a next signal estimate $y_{(n+1)}$, such that $y_{(n+1)}$ contains new information regarding the estimate of the missing samples of the estimation element and retains known information regarding the available samples of the first element, where $C$ is a natural number within the range of 1 to 20; wherein steps (b) and (c) are performed a predetermined number of times $(N + 1)$ for $n = 0,..., N$, where $n$ is a natural number. Preferably, $C$ is within the range of 1 to 10.
The computing of each de-noising matrix $D_{n+1}$ in step (b) preferably comprises applying the transform component to $y_n$ and thresholding coefficients of $y_n$ using a threshold $T_n$ and applying the inverse transform component. In preferred embodiments, $T_n$ is decremented, preferably by a fixed amount $\Delta T$, each time $n$ is incremented in computing the next de-noising matrix $\boldsymbol{D}_{n+1}$.

The transform component may comprise a transform matrix or a set of overcomplete transforms. Moreover, the transform component may be varied adaptively based on the information regarding the available samples of the first element in the computation of each de-noising matrix $\boldsymbol{D}_{n+1}$.

Preferably, each de-noising matrix $\boldsymbol{D}_{n+1}$ is computed such that when it is applied to $y_n$ it selects only the significant components of $y_n$.

In other aspects, the invention involves an apparatus including one or more components or modules for performing the processing operations described above in connection with the method steps. Such components/modules may be implemented with hardware, software, or combination thereof. One implementation may be realized using, for example, a computer system that includes a microprocessor and memory architecture in which the microprocessor performs the processing operations under the direction of software embodying an algorithm of the present invention. Alternatively, the processing operations may be performed by one or more application specific integrated circuits (ASICs), digital signal processing circuitry, etc., or a combination thereof. Other implementations will be apparent to those skilled in the art in light of the foregoing description.

In accordance with further aspects of the invention, any of the above-described methods or steps thereof may be embodied in a program of instructions (e.g., software) which may be stored on, or conveyed to, a computer or other processor-controlled device for execution. Alternatively, the program of instructions may be integrated with hardware designed to perform one or more of the steps. Such hardware may include, for example, one or more ASICs, digital signal processing circuitry, etc.

Other objects and attainments together with a fuller understanding of the invention will become apparent and appreciated by referring to the following description and claims taken in conjunction with the accompanying drawings.

## BRIEF DESCRIPTION OF THE DRAWINGS

Fig. 1 is a flow diagram illustrating the basic pipeline through which the techniques of this invention lead to estimates that utilize non-linear approximants (given a set of transforms and thresholds).

Figs. 2(a)-(d) illustrate sparse classes for nonlinear approximation on a "two sample" signal, with nonlinear approximation classes depicted as star-shaped sets.

Figs. 3(a)-(d) illustrate sparse recovery on a "two-sample" signal.

Fig. 4 is a flow chart illustrating the basic process flow of a main algorithm according to embodiments of this invention.

Fig. 5 illustrates the original grayscale test images, which are from left to right: teapot (1280 $\times$ 960), graphics (512 $\times$ 512), bubbles (512 $\times$ 512), and Lena (512 $\times$ 512).

Figs. 6(a)-(d) illustrate peak signal-to-noise ratio (PSNR) vs. threshold curves for the test images, $l$ =1.

Figs. 7(a)-(d) illustrate peak signal-to-noise ratio (PSNR) vs. threshold curves for the test images, $l$ = 2.

Fig. 8 illustrates portions of the processed images from teapot, bubbles, and Lena.

Fig. 9 is a block diagram illustrating an exemplary system which may be used to implement the techniques of the present invention.

## DESCRIPTION OF THE PREFERRED EMBODIMENTS

### A. Overview

The present invention is primarily directed to data prediction and estimation techniques that use translation invariant overcomplete representations to predict wavelet edge coefficients. That is, the overcomplete representations are used in wavelet domain to determine higher order statistical dependencies for wavelet coefficients over singularities.

By starting with the lowest frequency band of an l level wavelet decomposition, the techniques of this invention are designed to reliably estimate missing higher frequency coefficients over piecewise smooth signals. Unlike existing technologies that try to model singularities directly, the techniques of this invention form effective, simple and robust models for "non-singularities" through the use of sparse overcomplete decompositions. That is, the techniques of this invention do not model edges directly; rather, they implicitly obtain boundaries/edges by aggressively determining regions where the utilized translation invariant decomposition is sparse.

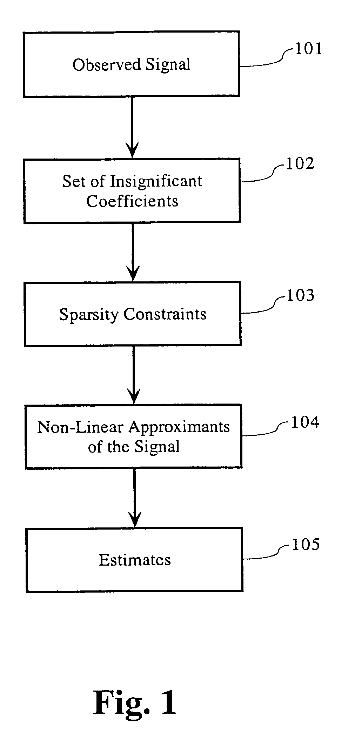

Given an overcomplete set of localized linear transforms that are expected to provide sparse decompositions over the signal of interest, i.e., the transforms are expected to yield many small-magnitude coefficients, these transforms are applied over the signal and the resultant transform coefficients are hard-thresholded to adaptively determine the set of insignificant coefficients for each transform as the indices of those coefficients that are thresholded to zero. This set is used to establish sparsity constraints, which are used to estimate the high-order dependencies of wavelet coefficients. Each of the overcomplete, localized transforms has "sparse regions" where it produces the sparse set of coefficients, and regions over singularities where sparsity properties fail. The techniques of this invention adaptively determine and prefer the sparse regions of each transform in forming overall estimates. Interestingly, this aggressive determination of sparse regions brings about the accurate determination of edges which form their boundaries. The techniques of this invention leads to estimates that utilize non-linear approximants (given a set of transforms and thresholds) via the pipeline shown in Fig. 1. From an observed signal 101 a set of insignificant coefficients 102 is obtained, which, in turn, gives sparsity constraints 103, from which nonlinear approximants of the signal 104 are obtained finally yielding estimates 105.

The process starts from an observed signal that only contains the low frequency wavelet coefficients (only the lowest frequency band of a two-dimensional l level wavelet transform). The remaining coefficients are treated as missing data. The techniques of this invention are then applied to predict the "missing" high frequency coefficients. This general prediction can be used in a variety of applications, for example, as part of a wavelet compression codec that affects the prediction to determine probability models for the next coefficient to be encoded, that uses DPCM type encoding, or as part of a wavelet decoder that does post-processing given the decoded information. Hence, the algorithms of this invention can easily be combined with today's compression codecs without necessitating complete redesigns. Similarly, since the invention enables the prediction of missing high frequency wavelet coefficients over edges, it can also be used to predict missing resolutions and thereby to increase signal density.

On a piecewise smooth signal, given available data and given the belief that certain portions of the signal are smooth (as established through sparsity constraints), the techniques of this invention provide a very good estimate of the missing data.

Additional details of the invention are described below.

### B. Estimation Framework and Algorithms

Let $x(N \times 1)$ denote an N-dimensional signal and assume a linear, orthonormal transform $\mathbf{G}(N \times N)$. Let $g_i^T$ $(1 \times N)$, $i = 1,..., N$ denote the transform basis (the rows of $\mathbf{G}$), and let $c_i = g_i^T x$, $i = 1,...,N$ denote the corresponding transform coefficients of $x$. This yields

$$x = \sum_{i=1}^{N} c_i g_i \qquad\qquad (1)$$

Define the insignificant set $V(x) = \{i \,\|\, c_i \,|<T\}$ for some threshold $T$. The cardinality of $V(x)$ is card $(V(x)) = N - K$. The main assumption is that

$$x = \sum_{i \notin V(x)} c_i g_i + \sum_{i \in V(x)} c_i g_i \cong \sum_{i \notin V(x)} c_i g_i, \qquad\qquad (2)$$

i.e., non-linear approximation with $\mathbf{G}$ using $K = K(T)$ coefficients renders a close approximation to $x$. Observe that this is equivalent to assuming that $|c_i| \cong 0$, $i \in V(x)$, since an orthonormal transform is being used. It is further assumed that $K << N$, or that $\mathbf{G}$ determines a sparse composition of $x$.

Given a distorted version of $x$, the main idea is to first obtain an estimate $\hat{V}$ of $V(x)$, establish sparsity constraints of the form $|c_i| \cong 0$, $i \in V$, and alleviate a portion of the distortion by affecting these constraints on the

distorted signal. $\hat{V}$ is determined by applying **G** to the distorted signal and using hard-thresholding on the resulting coefficients. It is very important to note that, unlike earlier work on de-noising (including applying thresholding techniques to inverse problems), the techniques of this invention establish adaptive linear constraints subject to available information and produce substantially different estimates. As will be shown, this corresponds to applying de-noising iteratively, rather than a single application. Furthermore, the approach of this invention uses a sequence of thresholds to address the fundamental nonconvexity that is inherent to this problem.

Adaptive linear estimators lead to sparsity constraints. Conversely, sparsity constraints lead to adaptive linear estimators. This has the consequence that optimal sparsity constraints are tied to optimal adaptive linear estimators where optimality is in the mean-squared-error sense. The techniques of this invention have the potential of constructing the conditional minimum mean-squared-error estimates (conditioned on available information) on certain classes of signals. It is also possible to relate the set of signals over which successful estimation will be achieved to the non-linear approximation classes of **G**. This set can be further expanded by adaptively choosing **G** based on the input signal using sparsity considerations or by using another basis pursuit algorithm.

The particular form of distortion considered in the context of this invention is the case in which all of the high frequency wavelet coefficients of an $l$ level wavelet decomposition of the signal are lost. Observe that the wavelet decomposition determines the distortion, and **G** that is used in carrying out the inventive techniques is a different orthonormal transform. Next, the sparsity constraints and the estimates constructed by the techniques of this invention will be described. As will be seen, the actual determination of $\hat{V}$ from the distorted signal makes this a nonconvex problem requiring a progression of estimates. Thus, a progressive algorithm is proposed to replace equations resulting from the sparsity constraints with de-noising iterations at a multitude of thresholds.

Regarding sparsity constraints, suppose that the original signal is arranged into a vector

$$x = \begin{bmatrix} x_0 \\ x_1 \end{bmatrix},$$

where $x_0(n_0 \times 1)$ constitutes the available samples and $x_1$ $(n_1 \times 1)$ denotes the missing samples. Then, $n_0 + n_1 = N$. An objective is to form an estimate of the original by

$$y = \begin{bmatrix} x_0 \\ \hat{x}_1 \end{bmatrix}, \tag{3}$$

where $\hat{x}_1$ is an estimate of the missing samples in $x_1$. Assume zero-mean quantities.

Let $c(N \times 1)$ denote the transform coefficients of $y$, i.e., $c = \mathbf{G}y$. An estimate $\hat{V}$ of $V(x)$, and hence the indices of the significant and insignificant coefficients, are assumed as a given. Arrange and partition the rows of **G** into $\mathbf{G}_I(N - K) \times N$ and $\mathbf{G}_S$ $((K) \times N)$ to indicate the portions of the transform that are determined to produce insignificant and significant transform coefficients respectively, i.e., let

$$\mathbf{G} = \begin{bmatrix} \mathbf{G}_I \\ \mathbf{G}_S \end{bmatrix}. \tag{4}$$

The task is to estimate $x_1$ subject to the constraint $\mathbf{G}_I y = 0$, i.e., the insignificant transform coefficients are zero. However, in order to avoid issues related to equation ranks and to prepare for overcomplete transforms to be discussed later, this constraint is reformulated by considering the equivalent problem where $\hat{x}_1$ that minimizes $\|\mathbf{G}_I y\|^2$ is obtained. Partition the columns of $\mathbf{G}_I$ into $\mathbf{G}_{I,0}((N - K) \times n_0)$ and $G_{I,1}$ $(K \times n_1)$ to indicate portions that overlap $x_0$ and $x_1$ such that

$$G_I = [G_{I,0} | G_{I,1}], \tag{5}$$

and the minimization becomes the sparsity constraint

$$B_{l,1}^{T}G_{l,0}x_0 + G_{l,1}^{T}G_{l,1}\hat{x}_1 = 0. \tag{6}$$

Depending on the rank of $\mathbf{G}_{l,1}$ equation (6) can be solved either exactly to recover $\hat{x}_1$ or it can be solved within the positive eigenspace of $\mathbf{G}_{l,1}^{T}\mathbf{G}_{l,1}$ to recover the portion of $\hat{x}_1$ lying in this subspace.

The discussion now turns to iterative solutions of sparsity constraints.

In order to make way for progressive estimates, a procedure is first formulated that solves equation (6) using iterations. Let $\mathbf{S}(N \times N)$ be the diagonal selection matrix with diagonal entries of 0 and 1 such that

$$\begin{bmatrix} 0 \\ \mathbf{G}_s \end{bmatrix} = \mathbf{SG}.$$

Orthonormal transform de-noising based on hard-thresholding of a vector $y$ will obtain the coefficients $\mathbf{G}y$. Threshold these coefficients to determine significant ones, i.e., construct $\mathbf{SG}y$, and inverse transform to form $\mathbf{G}^{T}\mathbf{SG}y$.

Let $\mathbf{D}(N \times N)$ denote the matrix that when applied to a vector $y$ yields a new vector with only the significant components of $y$ via

$$D = G^{T}SG. \tag{7}$$

It is important to observe that the hard-thresholding operation is hidden inside $\mathbf{S}$. Note also that the de-noising matrix $\mathbf{D}$ is a contraction, i.e., $\|\mathbf{D}y\| \leq \|y\|$, since $\mathbf{G}$ is orthonormal.

Let $\mathbf{P}_1(N \times N)$ denote the diagonal projection matrix having diagonal entries 0 and 1 such that

$$\begin{bmatrix} 0 \\ x_1 \end{bmatrix} = \mathbf{P}_1 x.$$

The discussion now turns to an algorithm that solves equation (6) via iterations.

Regarding basic iterations, let

$$y^0 = \begin{bmatrix} x_0 \\ u \end{bmatrix}$$

for an arbitrary vector $u(n_1 \times 1)$. Let C denote the maximum iteration count. For k = 0,1,..., C , and for a given D , define the iterations

$$y^{k+1} = P_1 D y^k + (1 - P_1) y^k, \tag{8}$$

where 1 is the $N \times N$ identity.

It should be noted that

$$(1 - \mathbf{P}_1)y^k = \begin{bmatrix} x_0 \\ 0 \end{bmatrix}$$

for all k , and $y^{k+1}$ is obtained by de-noising $y^k$ (via the term $\mathbf{D}y^k$), taking those pixels in the missing regions ($\mathbf{P}_1\mathbf{D}_y k$), and adding the available information $x_0$ via the term $(1 - \mathbf{P}_1)y^k$. Observe also that the de-noising matrix $\mathbf{D}$ is fixed throughout the iterations, i.e., the coefficient thresholding or selection that is hidden inside S in equation (7) is determined in the beginning, and then kept fixed throughout the iterations.

The basic iterations described above converge to a vector

$$y^* = \begin{bmatrix} x_0 \\ \hat{x}_1 \end{bmatrix}$$

where $\hat{x}_1$ satisfies equation (6). The reason for this is that convergence is established if there exists a $y^*$ that satisfies

$$y^* = P_1 D y^* + (1 - P_1) y^*, \tag{9}$$

and the sequence $\|y^k - y^*\|$ converges to 0 regardless of the value of the vector $u$. Starting with equation (9), and using the definition of the de-noising matrix **D** and equation (5), leads to a $y^*$ with components that satisfy equation (6). To see that $\|y^k - y^*\| \to 0$ as $C, k \to \infty$, let $y^{k-1} = y^* + w$ for some vector $w$. By construction

$$(1 - P_1) y^* = (1 - P_1) y^k = \begin{bmatrix} x_0 \\ 0 \end{bmatrix}$$

is obtained, for any $k$. Thus, $(1 - P_1) w = 0$, and simply noting that D is a symmetric positive semidefinite contraction is sufficient to show $\|y^k - y^*\| \le \|w\| = \|y^{k-1} - y^*\|$, with equality if and only if $y^{k-1}$ is also a solution.

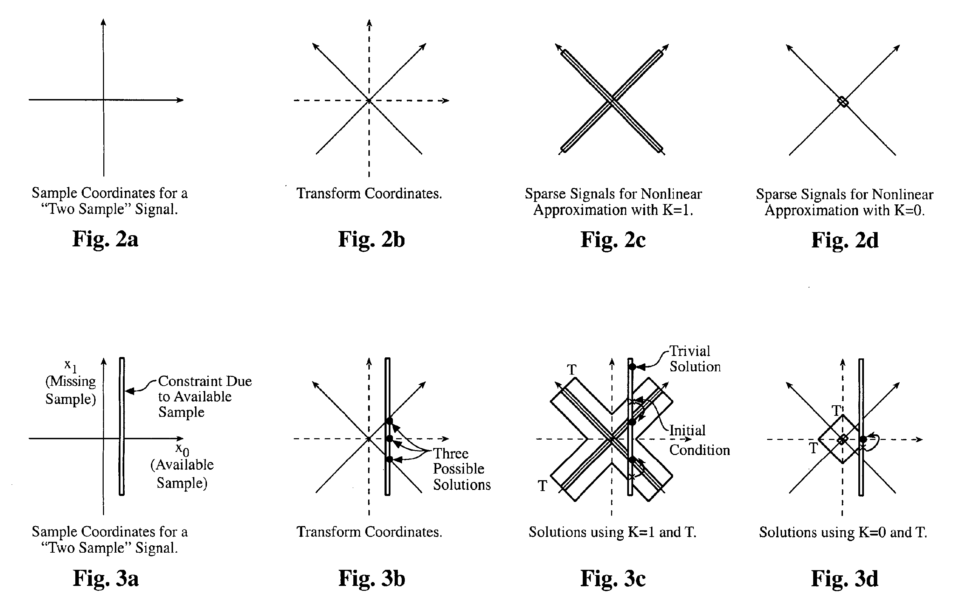

Turning now to the determination of $V$, starting with an initial estimate of $x_1$ (the all zero estimate), apply **G** to the resulting signal, and hard-threshold the resulting coefficients to determine the insignificant set. This process is initial condition dependent since the class of sparse signals under nonlinear approximation make up non-convex sets (a convex combination of two signals, which can represented by $K$ coefficients each, may require more than $K$ coefficients in the given basis). Figs. 2(a) and 2(b) illustrate sample and transform coordinates for a "two sample" signal. The sparse classes of signals using nonlinear approximation are shown in Figs. 2(c) and 2(d). As can be seen, the sparse classes for nonlinear approximation are star-shaped sets. (A set $C \subset \Re^n$ is said to be star-shaped, if for any $x \in C$, the line segment joining the origin to $x$ lies in $C$. Star-shaped sets, while substantially different, exhibit some similar properties with convex sets, as has been described in the literature.) Such sets and nonlinear approximation form good models for most natural images since the convex combination of two natural images has different properties and can typically be separated into its constituents.

As illustrated in Fig. 3(b), the available sample $x_0$ determines a constraint which intercepts the transform domain coordinates in two locations. Since a threshold is being used to determine the sparsity constraint which the solution must satisfy, depending on the initial conditions, these two locations determine two of the possible solutions (Fig. 3(c)), and a third solution is obtained as the point where the available pixel constraint is closest to the origin (Fig. 3(d)). An example for trivial solutions, where thresholding will determine the insignificant set as the empty set is shown at the top in Fig. 3(c).

The techniques of this invention combat this initial condition dependence by starting with a high threshold (resulting in a small $K$) and find progressive solutions for the missing samples by reducing thresholds (effectively increasing $K$). With the model in equation (2), this corresponds to searching over progressively larger classes of signals as $K$ is increased. In this fashion, the search using a threshold serves as the initial condition for the search with the next threshold.

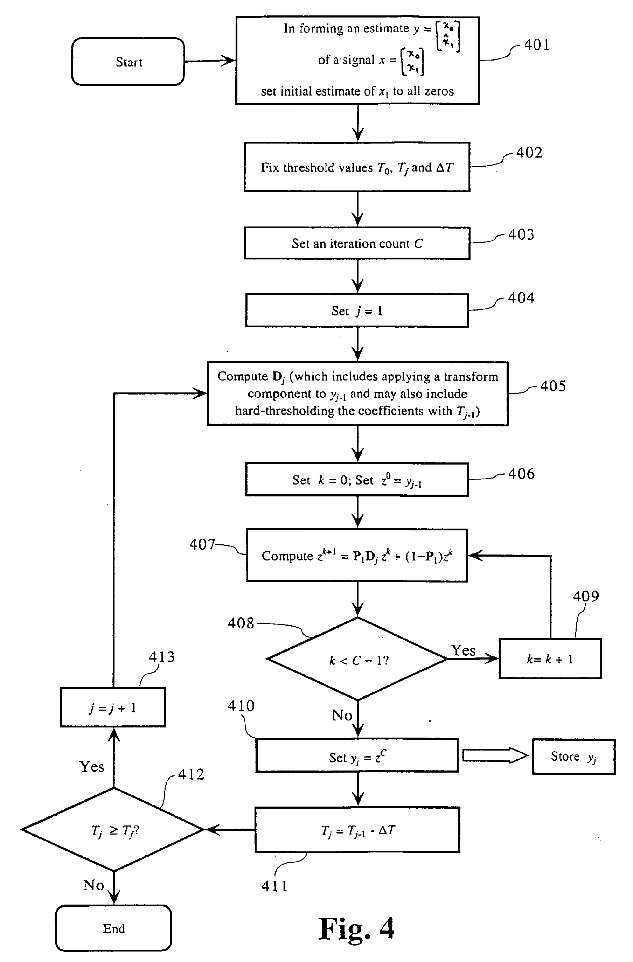

Having described various details of the estimation process including sparsity constraints, iterative solutions therefor, and determination of $V$, I now describe a preferred embodiment of a main algorithm that essentially computes the basic iterations described above, and in so doing, estimate or predict a portion $x_1$ of an original signal $x$, of which a portion $x_0$ is known. Such algorithm is illustrated in the flow diagram of Fig. 4. The algorithm begins by setting the initial estimate of $\hat{x}_1$ as all zeros (step 401). That is, for an estimate $y = [x_0 \ x_1]^T$ to be obtained of an original signal represented by the vector $x = [x_0 \ x_1]^T$ ($x_0$ known, $x_1$ unknown) an initial estimate $y_0 = [x_0 \ 0]^T$ is formed, i.e., the initial estimate of $x_1$, the unknown part of the original signal $x$.

In step 402 an initial threshold $T_0$, a final threshold $T_f$, and $\Delta T$ are fixed. $T_0$ may be set to a multiple of the expected standard deviation of the unknown or may be computed using another suitable statistical calculation, and $T_f$ may be set to a suitable lower limit. See the simulation results below for suitable values for these threshold variables.

An iteration count $C$ is set in step 403. In the illustrated embodiments $C = 1$, but it can be set at a higher integer if additional iterations are desired. Count variable $j$ is set to 1 in step 404.

After these settings are made, a set of transforms, e.g., **G**, is applied to $y_{j-1}$ and coefficients are hard-thresholded using $T_{j-1}$. From these operations, $V_j$, the corresponding selection matrix $\mathbf{S}_j$, and the de-noising matrix $\boldsymbol{D}_j$ are determined in step 405.

Before entering the basic iteration subroutine, $k$ is set to 0 and $z^\circ$ is set equal to $y_{j-1}$ in step 406. Then the basic iteration subroutine controlled by $C$ is called (step 407). In step 407, $z^{k+1}$ is computed. Note that this the computation of equation (8) except that the variable $y$ has been changed to $z$ and D is indexed by the subscript $j$ for notational consistency. After computing z' it is determined in step 408 if another iteration is to be carried out, that is, if $k < C$ -1. If another iteration is to be done, k is incremented in step 409 and the algorithm loops back to step 407. The iterations continue until the subroutine returns $z^C$, i.e., $k \geq C$ , at which time the algorithm exits the iteration loop. In step 410, $y_j$ is set equal to $z^C$ and the current $y_j$ is stored. Then, the threshold is reduced in step 411 by $\Delta T$. If the reduced threshold is greater than or equal to the final threshold ($T_j \geq T_f$), as determined in step 412, count variable $j$ is incremented in step 413 and the algorithm returns to step 405; otherwise, the algorithm ends and the final $y_j$ is obtained.

Turning now to overcomplete transforms and weighed overcomplete denosing, how an overcomplete transform set is used to establish sparsity constraints will now be described. Let $\mathbf{G}^1$, $\mathbf{G}^2$ ,..., $\mathbf{G}^M$ denote a set of orthonormal, overcomplete transforms with each transform arranged so that, using the notation set forth in connection with the sparsity constraints discussion,

$$\mathbf{G}^l = \begin{bmatrix} \mathbf{G}^l_I \\ \mathbf{G}^l_S \end{bmatrix} ,$$

where $l = 1,..., M$, and where $\mathbf{G}^l_I$ $and$ $\mathbf{G}^l_S$ are the insignificant and significant portions respectively of the transform $\mathbf{G}^l$ as determined via $V^l$. Similar to the development immediately before equation (6), sparsity constraints are obtained via a minimization problem where an estimate $\hat{x}_1$ of $x_1$ is chosen that minimizes

$$\sum_{l=1}^{M} \left\| \mathbf{G}^l_I y \right\|^2 . \tag{10}$$

This results in the overcomplete analog of equation (6) given by

$$(\sum_{l=1}^{M} \mathbf{G}^{l\,T}_{I,1} \mathbf{G}^l_{I,0}) x_0 + (\sum_{l=1}^{M} \mathbf{G}^{l\,T}_{I,1} \mathbf{G}^l_{I,1}) \hat{x}_1 = 0 , \tag{11}$$

from which $\hat{x}_1$ can be solved either exactly or within the positive eigenspace of

$$(\sum_{l=1}^{M} \mathbf{G}^{l\,T}_{I,1} \mathbf{G}^l_{I,1}).$$

Using

$$\tilde{\mathbf{G}} = \begin{bmatrix} \mathbf{G}^1 \\ \mathbf{G}^2 \\ \cdot \\ \cdot \\ \cdot \\ \mathbf{G}^M \end{bmatrix}, \ \tilde{c} = \tilde{\mathbf{G}}y, \ \tilde{\mathbf{G}}^{-1} = \frac{1}{M}\tilde{\mathbf{G}}^T \qquad\qquad (12)$$

it is possible to define an overcomplete de-noising matrix as

$$\tilde{\mathbf{D}} = \frac{1}{M}\tilde{\mathbf{G}}^T\tilde{\mathbf{S}}\tilde{\mathbf{G}}$$

. Once the basic iteration procedure described above is updated to use $\tilde{\mathbf{D}}$, it can be shown that the convergence is now to equation (11). The main algorithm is updated to find insignificant sets for each transform so that the overcomplete de-noising matrix can be constructed.

While sparsity constraints obtained via the equal weighted combination in equation (10) are superior to those obtained in equation (6), it can be shown that there are significant benefits to allowing different transforms to contribute differently. The easiest case to imagine is where one of the transforms in the overcomplete set fails to provide a sparse decomposition, but due to hard-thresholding, contributes to equation (10). Equation (10) and its single transform version above both can be written as minimizations of $y^T(\vartheta - 1)_y$ with different de-noising matrices $\vartheta = \mathbf{D}$ and $\vartheta = \tilde{\mathbf{D}}$. This matrix effectively selects the significant components of the signal, and a more sophisticated determination of these significant components via better thresholding techniques and/or weighted methods is expected to increase performance. The weighted overcomplete de-noising method described in related application serial no. 10/779,540 referenced above can then be used to construct a better $\vartheta$, if desired.

### C. Simulation Results

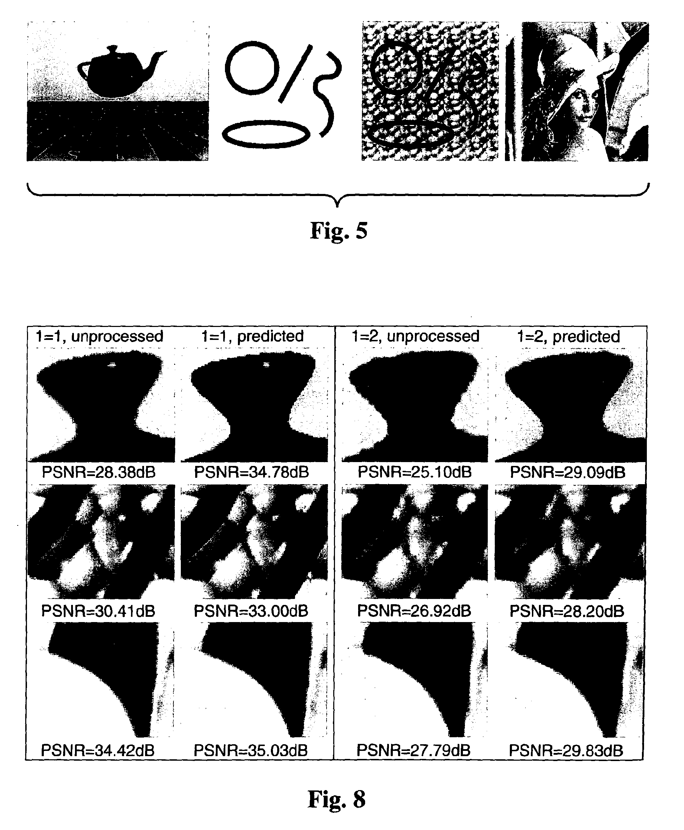

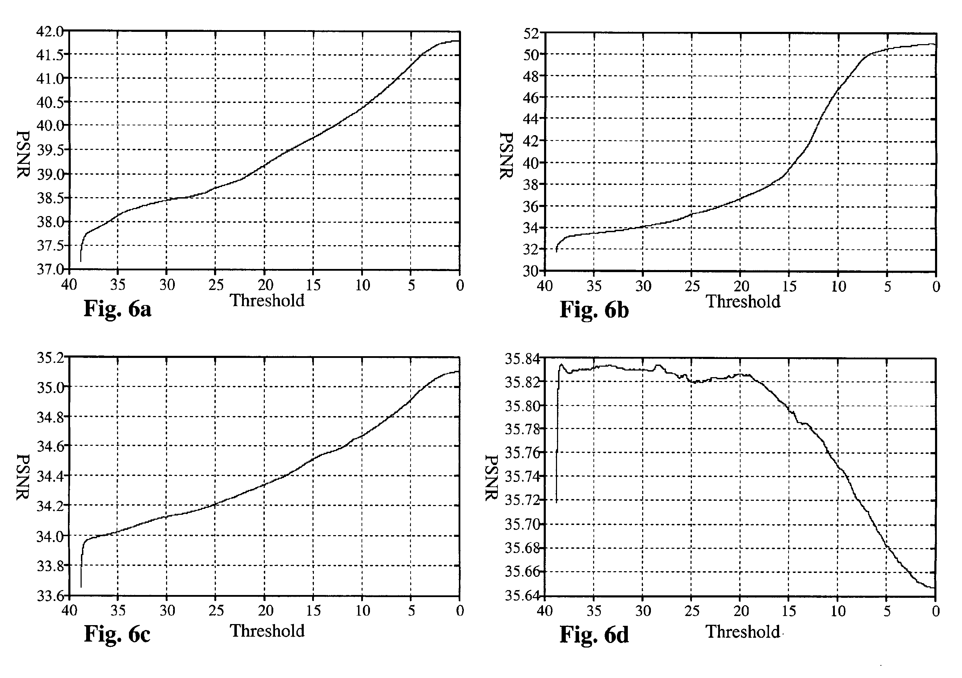

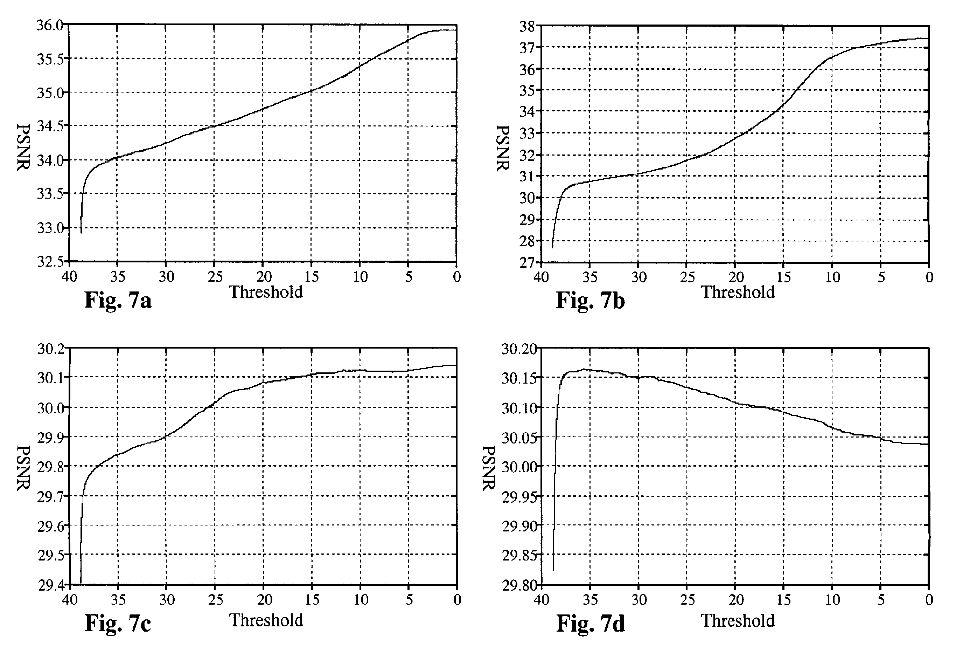

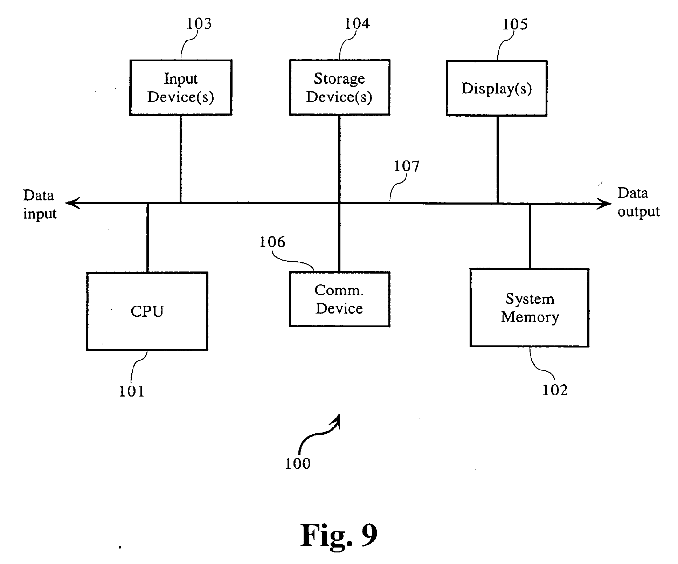

A fully overcomplete $8 \times 8$ DCT decomposition was used in simulations. The wavelet decomposition is the standard $D7$ - D9 bank. The original grayscale images (teapot, graphics, bubbles and Lena) are illustrated in Fig. 5. The algorithm described above was used to estimate the missing high frequency coefficients when $l = 1$, half resolution case where only a quarter of the wavelet coefficients are available (all in the $LL$ band), and when $l = 2$, quarter resolution case where only one sixteenth of the wavelet coefficients are available (all in the $LLLL$ band). $T_0 = 40$, $T_f = 1$, $and \ \Delta T = 0.1$. peak signal-to-noise-ratio (PSNR) vs. threshold results of the above-described algorithm are shown in Figs. 6 (a)-(d) for the test images teapot 36.17dB to 41.81dB, graphics 30.48dB to 51dB, bubbles 33.10dB to 35.10dB, and Lena 35.26dB to 35.65dB, respectively, for $l = 1$; and in Figs. 7(a)-(d) for teapot 32.54dB to 35.93dB, graphics 27.15dB to 37.44dB, bubble 29.03dB to 30.14dB, and Lena 29.58dB to 30.04dB, respectively, for $l = 2$. In each of the figures, the initial PSNR value denotes the PSNR with no high frequency prediction, which is improved to the final PSNR. Portions of processed images of teapot, bubbles and Lena are shown in Fig. 8.

### D. Implementations and Applications

Fig. 9 illustrates an exemplary system 100 which may be used to implement the processing of the present invention. As illustrated in Fig. 9, the system includes a central processing unit (CPU) 101 that provides computing resources and controls the computer. CPU 101 may be implemented with a microprocessor or the like, and may also include a graphics processor and/or a floating point coprocessor for mathematical computations. System 100 further includes system memory 102 which may be in the form of random-access memory (RAM) and read-only memory (ROM). The system memory may be used to store a program that implements an algorithm of the present invention during the program's execution, as well as input, output data and/or intermediate results.

System 100 includes, or is capable of communicating with, various peripheral components that include appropriate controllers. For example, a scanner or equivalent device may be used to digitize documents including images to be processed by system 100 in accordance with the invention. A to-be-processed signal may be generated on or imported into the system in any suitable way. Other types of digital signals, e.g., audio or video, may also be imported in any suitable way. System 100 also preferably includes various operator input devices 103, such as a keyboard, mouse and/or stylus, etc. to facilitate the manipulation of data.

One or more storage devices 104 each of which includes a storage medium such as magnetic tape or disk, or an optical medium may be used to record programs of instructions for operating systems, utilities and applications which may include embodiments of programs that implement various aspects of the present invention. A display 105 of any known type may also be included.

After a signal is processed in accordance with the invention it may be output to a suitable device. For example, documents including images processed in accordance with the invention may be output to a printer.

A communications device 106 enables system 100 to connect to remote devices through any of a variety of networks including the Internet, a local area network (LAN), a wide area network (WAN), or through any suitable electromagnetic carrier signals including infrared signals.

In the illustrated system, all major system components connect to bus 107 which may represent more than one physical bus. However, various system components may or may not be in physical proximity to one another. For example, the input data and/or the output data may be remotely transmitted from one physical location to another. Also, programs that implement various aspects of this invention may be accessed from a remote location (e.g., a server) over a network. Such data and/or programs may be conveyed through any of a variety of machine-readable medium including magnetic tape or disk or optical disc, network signals, or any other suitable electromagnetic carrier signals including infrared signals.

While the present invention may be conveniently implemented with software, a hardware implementation or combined hardware/software implementation is also possible. A hardware implementation may be realized, for example, using ASIC(s), digital signal processing circuitry, or the like. As such, the claim language "device-readable medium" includes not only software-carrying media, but also hardware having instructions for performing the required processing hardwired thereon and also hardware/software combination. Similarly, the claim language "program of instructions" includes both software and instructions embedded on hardware. Also, the component(s) referred to in the apparatus claims includes any device or combination of devices capable of performing the claimed operations. Such devices may include instruction-based processors (e.g., CPUs), ASICs, digital processing circuitry, or combination thereof. With these implementation alternatives in mind, it is to be understood that the figures and accompanying description provide the functional information one skilled in the art would require to write program code (i.e., software) or to fabricate circuits (i.e., hardware) to perform the processing required.

As the foregoing demonstrates, the present invention provides software- or hardware-based algorithms/techniques for predicting and estimating data that is missing from a digital signal using transforms that provide sparse decompositions. These algorithms are applicable to any digital signal including video, still image, audio (speech, music, etc.) signals. Prediction and estimation includes error correction resulting from network transmission, recovery of damaged images, scratch removal, etc. The algorithms of this invention may also be used to remove noise from a digital signal and/or to enhance signal density.

While the invention has been described in conjunction with several specific embodiments, further alternatives, modifications, variations and applications will be apparent to those skilled in the art in light of the foregoing description. Thus, the invention described herein is intended to embrace all such alternatives, modifications, variations and applications as may fall within the spirit and scope of the appended claims.

## Claims

**1.** A method for forming a signal estimate $y$, wherein the to-be-estimated signal $x$ includes a first element constituting available samples and a second element denoting missing samples, and wherein the signal estimate $y$ includes the first element and an estimation element denoting an estimate of the missing samples in the second element, the method comprising the steps of:

(a) setting an initial estimate of the estimation element in an initial signal estimate $y_0$ to all zeros;

(b) computing a de-noising matrix $\boldsymbol{D}_{n+1}$ based on a transform component; and

(c) applying the computed de-noising matrix $\boldsymbol{D}_{n+1}$ to $y_n$ between one and C times to form a next signal estimate $y_{(n+1)}$, such that $y_{(n+1)}$ contains new information regarding the estimate of the missing samples of the estimation element and retains known information regarding the available samples of the first element, where C is a natural number within the range of 1 to 20;

wherein steps (b) and (c) are performed a predetermined number of times (N + 1) for $n = 0,...,N$, where $n$ is a natural number.

2. The method of claim 1, wherein the computing of each de-noising matrix $D_{n+1}$ in step (b) comprises applying the transform component to $y_n$ and thresholding coefficients of $y_n$ using a threshold $T_n$ and applying the inverse transform component.

3. The method of claim 2, wherein $T_n$ is decremented each time n is incremented in computing the next de-noising matrix $D_{n+1}$.

4. The method of claim 3, wherein $T_n$ is decremented by a fixed amount $\Delta T$ each time n is incremented.

5. The method of claim 1, wherein the transform component comprises a transform matrix or a set of overcomplete transforms.

6. The method of claim 1, wherein the transform component is varied adaptively based on the information regarding the available samples of the first element in the computation of each de-noising matrix $D_{n+1}$.

7. The method of claim 1, wherein each de-noising matrix $D_{n+1}$ is computed such that when it is applied to $y_n$ it selects only the significant components of $y_n$.

8. The method of claim 1, wherein $C$ is a natural number within the range of 1 to 10.

9. An apparatus for forming a signal estimate $y$, wherein the to-be-estimated signal x includes a first element constituting available samples and a second element denoting missing samples, and wherein the signal estimate $y$ includes the first element and an estimation element denoting an estimate of the missing samples in the second element, the apparatus comprising:

   one or more components or modules configured to

   set an initial estimate of the estimation element in an initial signal estimate $y_0$ to all zeros;

   compute a de-noising matrix $D_{n+1}$ based on a transform component;

   apply the computed de-noising matrix $D_{n+1}$ to $y_n$ between one and $C$ times to form a next signal estimate $y_{(n+1)}$, such that $y_{(n+1)}$ contains new information regarding the estimate of the missing samples of the estimation element and retains known information regarding the available samples of the first element, where C is a natural number within the range of 1 to 20; and

   wherein the compute and apply operations are performed a predetermined number of times ($N + 1$) for $n = 0,..., N$, where $n$ is a natural number.

10. The apparatus of claim 9, wherein the one or more components or modules comprises one or more of the following: a processor, an application specific integrated circuit or a digital signal processor.

11. The apparatus of claim 9, wherein the apparatus is a computer system.

12. A device-readable medium having a program of instructions for directing a machine to perform a method for forming a signal estimate $y$, wherein the to-be-estimated signal $x$ includes a first element constituting available samples and a second element denoting missing samples, and wherein the signal estimate y includes the first element and an estimation element denoting an estimate of the missing samples in the second element, the program comprising instructions for:

   (a) setting an initial estimate of the estimation element in an initial signal estimate $y0$ to all zeros;

   (b) computing a de-noising matrix $D_{n+1}$ based on a transform component; and

   (c) applying the computed de-noising matrix $D_{n+1}$ to $y_n$ between one and $C$ times to form a next signal estimate $y_{(n+1)}$, such that $y_{(n+1)}$ contains new information regarding the estimate of the missing samples of the estimation

**EP 1 531 424 A2**

element and retains known information regarding the available samples of the first element, where C is a natural number within the range of 1 to 20; and

wherein instructions (b) and (c) are executed a predetermined number of times ($N + 1$) for $n = 0,...,N$, where $n$ is a natural number.

13. The device-readable medium of claim 12, wherein the instructions (b) for computing each de-noising matrix $\boldsymbol{D}_{n+1}$ comprises instructions for applying the transform component to $y_n$ and thresholding coefficients of $y_n$ using a threshold $T_n$ and applying the inverse transform component.

14. The device-readable medium of claim 13, wherein the instructions (b) further comprise instructions for decrementing $Tn$ each time $n$ is incremented in computing the next de-noising matrix $\mathbf{D}_{n+1}$.

15. The device-readable medium of claim 14, wherein the instructions (b) specify that $T_n$ is decremented by a fixed amount $\Delta T$ each time $n$ is incremented.

16. The device-readable medium of claim 12, wherein the transform component comprises a transform matrix or a set of overcomplete transforms.

17. The device-readable medium of claim 12, wherein the transform component is varied adaptively based on the information regarding the available samples of the first element in the computation of each de-noising matrix $\boldsymbol{D}_{n+1}$.

18. The device-readable medium of claim 12, wherein each de-noising matrix $\boldsymbol{D}_{n+1}$ is computed such that when it is applied to $y_n$ it selects only the significant components of $y_n$.

19. The device-readable medium of claim 12, wherein $C$ is a natural number within the range of 1 to 10.

**Fig. 1**

Sample Coordinates for a
"Two Sample" Signal.

**Fig. 2a**

Transform Coordinates.

**Fig. 2b**

Sparse Signals for Nonlinear
Approximation with K=1.

**Fig. 2c**

Sparse Signals for Nonlinear
Approximation with K=0.

**Fig. 2d**

$x_1$
(Missing
Sample)

Constraint Due
to Available
Sample

$x_0$
(Available
Sample)

Sample Coordinates for a
"Two Sample" Signal.

**Fig. 3a**

Three
Possible
Solutions

Transform Coordinates.

**Fig. 3b**

T

Trivial
Solution

Initial
Condition

T

T

Solutions using K=1 and T.

**Fig. 3c**

T

T

Solutions using K=0 and T.

**Fig. 3d**

EP 1 531 424 A2

Start

In forming an estimate $y = \begin{bmatrix} x_0 \\ \hat{x}_1 \end{bmatrix}$ of a signal $x = \begin{bmatrix} x_0 \\ x_1 \end{bmatrix}$ set initial estimate of $x_1$ to all zeros  401

Fix threshold values $T_0$, $T_f$ and $\Delta T$  402

Set an iteration count $C$  403

Set $j = 1$  404

Compute $\mathbf{D}_j$ (which includes applying a transform component to $y_{j-1}$ and may also include hard-thresholding the coefficients with $T_{j-1}$)  405

Set $k = 0$; Set $z^0 = y_{j-1}$  406

407 — Compute $z^{k+1} = \mathbf{P}_1\mathbf{D}_j z^k + (1-\mathbf{P}_1)z^k$

409

408 — $k < C - 1$?  Yes  $k = k + 1$

No

413 — $j = j + 1$

410 — Set $y_j = z^C$  →  Store $y_j$

Yes

412 — $T_j \geq T_f$?

$T_j = T_{j-1} - \Delta T$  411

No

End

**Fig. 4**

**Fig. 5**

| 1=1, unprocessed | 1=1, predicted | 1=2, unprocessed | 1=2, predicted |
|---|---|---|---|
| PSNR=28.38dB | PSNR=34.78dB | PSNR=25.10dB | PSNR=29.09dB |
| PSNR=30.41dB | PSNR=33.00dB | PSNR=26.92dB | PSNR=28.20dB |
| PSNR=34.42dB | PSNR=35.03dB | PSNR=27.79dB | PSNR=29.83dB |

**Fig. 8**

EP 1 531 424 A2

**Fig. 6d**

**Fig. 6c**

**Fig. 6b**

**Fig. 6a**

Fig. 7b

Fig. 7d

Fig. 7a

Fig. 7c

**Fig. 9**